# EUROPÄISCHE PATENTSCHRIFT

(11) **EP 4 133 565 B1**
(45) Veröffentlichungstag und Bekanntmachung des Hinweises auf die Patenterteilung: **28.02.2024**
(21) Anmeldenummer: 21735233.5
(22) Anmeldetag: 18.06.2021
(51) Int. Cl.: H02J 3/26, H02J 3/00, H02M 1/12, H02M 5/458

(54) **FILTERVORRICHTUNG**
FILTER DEVICE
DISPOSITIF FILTRANT

(30) Priorität: 29.06.2020 EP 20182913
(43) Veröffentlichungstag der Anmeldung: 15.02.2023
(73) Patentinhaber: Siemens Aktiengesellschaft, 80333 München (DE)
(72) Erfinder: LANGE, Robert, 08451 Crimmitschau (DE)
(74) Vertreter: Siemens Patent Attorneys
(86) Internationale Anmeldenummer: PCT/EP2021/066608
(87) Internationale Veröffentlichungsnummer: WO 2022/002640

(56) Entgegenhaltungen:
- EP-A1- 2 048 771
- WO-A1-2017/127856

## Beschreibung

Die Erfindung betrifft eine Filtervorrichtung zur Verwendung für einen Umrichter an einem Wechselspannungsnetz, aufweisend eine Drosseleinheit und eine Kondensatoreinheit.

Elektrische Geräte der Antriebs- und Automatisierungstechnik, aber auch der Energieversorgung, können im Betrieb beispielsweise leitungsgebundene und/oder feldgebundene elektrische Störungen erzeugen. Zur Verringerung derartiger Störaussendung kommen für die Verringerung bzw. Vermeidung von Gleichtaktströmen meist Gleichtaktdrosseln in Verbindungen mit Kondensatoreinheiten für entsprechende Filter zum Einsatz.

Als Gleichtaktströme werden Ströme in den einzelnen Phasen einer elektrischen Leitung bezeichnet, welche, im Gegensatz zu Gegentaktströmen, jeweils das gleiche Vorzeichen bzgl. ihrer Stromrichtung aufweisen.

Die Gegentaktströme hingegen addieren sich bzgl. ihrer Stromrichtung, insbesondere im störungsfreien Fall, in der Summe ihrer Ströme zu Null, d.h. dass der insgesamt in den Phasen einer elektrischen Leitung zu einem Verbraucher hinfließende Strombetrag gleich dem in den Phasen vom Verbraucher zurückfließenden Strombetrag ist. Dies gilt insbesondere auch beim Einsatz eines Nullleiters. Die daraus resultierenden Störgrö-ßen werden auch symmetrische Störungen oder Gegentaktstörungen genannt.

Da Gleichtaktströme zum Verbraucher hin die gleiche Stromrichtung aufweisen, nimmt deren Rückstrom über elektrostatische Kapazitäten, insbesondere über Leitungskapazitäten, seinen Weg über geerdete Bauelemente der elektrischen Geräte bzw. über die Umgebungserde hin zum Energieerzeuger.

Aus den Gleichtaktströmen resultierende Störgrößen werden auch als asymmetrische Störungen oder Gleichtaktstörungen bezeichnet.

Verursacht werden Gleichtaktstörungen beispielsweise durch Funkenstörungen bei Bürstenmotoren, durch Schaltnetzteile, und Frequenzumrichter für elektrische Maschinen, wobei auch signifikante elektrische Verluste bzw. Belastungen bei elektrischen Geräten, bei mit ihnen verbundenen elektrischen Leitungen und letztendlich bei Energieverteilungssystem (Netze, Transformatoren) und Energieerzeuger (Generatoren) auftreten können.

Für einen Gleichtaktfilter werden häufig stromkompensierte Drosseln mit Drosselkern als Gleichtaktdrossel verwendet, wobei beispielsweise die jeweils pro Phase um den gemeinsamen Drosselkern gewickelten Windungen die gleiche Windungszahl aufweisen.

Ferner weist der Gleichtaktfilter als Kondensatoreinheit sogenannte in Y-Konfiguration von verschalteten Kondensatoren (Y-Kondensatoreinheit) auf, welche mittels eines Schutzleiters (PE) mit einem Erdpotential verbunden sind.

Dieser Gleichtaktfilter mit einer meist sehr niederohmigen Verbindung der Y-Kondensatoreinheit über den Schutzleiter mit dem Erdpotential eignet sich besonders für die Ableitung des Gleichtaktstroms (der Störgröße) beim Betrieb von elektrischen Geräten, z.B. Umrichtern, an einem TT-Netz (TT franz.: Terre Terre) oder TN-Netz (TN franz.: Terre Neutre) mit einem auf Erdpotential geerdeten Netzsternpunkt an der Erzeugerseite des Netzes.

Diese Netze weisen zumindest eine der folgenden Auslegungen bzw. Anschaltungen des auf Erdpotential geerdeten Netzsternpunkt auf, wonach der Schutzleiter der elektrischen Leitung allein, der Schutzleiter mittels einer zumindest teilweisen Kombination von Nullleiter (N) und Schutzleiter oder der Nullleiter der elektrischen Leitung allein mit dem geerdeten Netzsternpunkt an der Erzeugerseite des entsprechenden Netzes (der Stromquelle) verbunden ist.

Die über den Schutzleiter mit dem Erdpotential verbundene Y-Kondensatoreinheit eines Gleichtaktfilters mit Gleichtaktdrossel für elektrische Geräte, wie z.B. Umrichtern, kann jedoch nicht an einem insbesondere auf elektrische Störungen überwachten IT-Netz (IT franz.: Isolé Terre) betrieben werden, welches bzgl. seiner Phasen insbesondere an der Erzeugerseite (der Stromquelle) erdungsfrei, also gegenüber dem Erdpotential isoliert, ausgelegt sind. Hier sind im störungsfreien Betrieb keine oder nur sehr geringe Ableitströme insbesondere über die Y-Kondensatoreinheit und den Schutzleiter an das Erdpotential zulässig.

Kommt ein Betrieb von elektrischen Geräten, wie z.B. Umrichtern, an einem TT-Netz oder einem TN-Netz zum Einsatz, bei denen im Gegensatz zu einem geerdeten Netzsternpunkt ein Außenleiter also eine Phase des TT- oder TN-Netzes an der Erzeugerseite (der Stromquelle) mit dem geerdeten Erdpotential verbunden ist, können auch hier für spezifische Betriebszustände keine oder nur sehr geringe Ableitströme insbesondere über die Y-Kondensatoreinheit und den Schutzleiter an das Erdpotential zulässig sein.

Bisher ist es daher vorsorglich meist üblich, solche elektrischen Geräte mittels eines vorgeschalteten Trenntransformator an erdungsfreien IT-Netzen oder TN- und TT-Netzen mit geerdetem Außenleiter zu betreiben, wobei der Trenntransformator sekundärseitig einen geerdeten Netzsternpunkt aufweisen muss und sehr kostenintensiv und bauraumverbrauchend ist.

Ferner besteht die Möglichkeit, die Y-Kondensatoreinheit an dem entsprechenden elektrischen Gerät zu entfernen oder die Verbindung zu dem geerdeten Schutzleiter und damit dem Erdpotential aufzutrennen. Dies ist jedoch im Allgemeinen nur möglich, wenn keine stromkompensierte Drossel im Filter am elektrischen Gerät eingesetzt wird.

Das Auftrennen der Y-Kondensatoreinheit von dem geerdeten Schutzleiter führt zwar einerseits zur Verhinderung oder zumindest zur Verringerung der Ableitströme bzw. auch zu einer Verringerung der Spannungsbelastung der Kondensatoren der Y-Kondensatoreinheit, jedoch kann andererseits die stromkompensierte Drossel periodisch in Sättigung getrieben werden, da der Ableitpfad für die Gleichtaktströme der Gleichtaktstörungen durch die Auftrennung die Y-Kondensatoreinheit an dieser Stelle unwirksam ist. Dies kann zu einer übermäßigen Erwärmung des Drosselkerns der stromkompensierten Drossel führen und eine Zerstörung der Gleichtaktdrossel hervorrufen.

Auch ist es natürlich ferner möglich, die stromkompensierte Drossel derart überdimensioniert auszulegen, dass sie für alle denkbaren Einsatzfälle bei einer Auftrennung der Verbindung zwischen Y- Kondensatoreinheit und dem geerdetem Schutzleiter gerüstet ist, wobei dieses Vorgehen in ineffizienter Weise zu hohen Kosten und einem hohen Bauraumverbrauch führt.

Die EP 2 048 771 A1 offenbart eine Filtervorrichtung für einen Antrieb, angeschlossen zwischen einem Gleichrichtermodul eines Frequenzumrichters und einem AC-Stromversorgungsnetz. Die Filtervorrichtung umfasst einen EMV-Filter mit einer Gleichtaktinduktivität, welche Wicklung in jeder Phase des Versorgungsnetzes aufweist, wobei die Wicklungen magnetisch miteinander gekoppelt sind. Im Abtastfrequenzbereich des Antriebs und im Resonanzfrequenzbereich des EMV-Filters soll die Sättigung der Gleichtaktinduktivität des EMV-Filters vermieden werden.

In der WO 2017/127856 A1 wird eine Schaltungsanordnung für einen Frequenzumrichter aufgezeigt, welche aus einem passiven, netzseitigen EMV-Filter und einem aktiven Filter besteht. Der passive, netzseitige EMV-Filter weist eine Kondensatoranordnung aus drei mit den jeweiligen Phasen des Netzes verbundenen Kondensatoren auf, welche einen Sternpunkt ausbilden. Der Sternpunkt ist über einen weiteren Kondensator mittels eines Schalters mit einem Erdpotential elektrisch verbindbar.

Der Erfindung liegt daher die Aufgabe zugrunde, eine effiziente Filtervorrichtung mit einer Gleichtaktdrossel und einer Kondensatoreinheit vorzuschlagen, welche einerseits für den Einsatz in einem Netz mit geerdetem Netzsternpunkt und andererseits für den Einsatz in einem Netz mit geerdetem Außenleiter oder einem erdungsfreien Netz geeignet ist, ohne die Gleichtaktdrossel unzulässig zu erwärmen.

Die Aufgabe wird durch eine Filtervorrichtung mit den in Anspruch 1 angegebenen Merkmalen, durch einen Umrichter mit der Filtervorrichtung nach den in Anspruch 8 angegebenen Merkmalen und durch ein Verfahren zum Betrieb der Filtervorrichtung nach den in Anspruch 10 angegebenen Merkmalen gelöst.

Für die Lösung der Aufgabe wird eine Filtervorrichtung zur Verwendung für einen Umrichter an einem Wechselspannungsnetz vorgeschlagen, aufweisend eine Drosseleinheit, eine Kondensatoreinheit und Mittel zur Sättigungsminderung der Drosseleinheit.

Das Mittel zur Sättigungsminderung der Drosseleinheit verhindert in vorteilhafter Weise, dass die Gleichtaktdrossel unzulässig erwärmt wird. Somit ist die Filtervorrichtung mit der Drosseleinheit als Gleichtaktdrossel gemeinsam mit der Kondensatoreinheit für den Einsatz beispielsweise des Umrichters an Netzen mit unterschiedlichen Erdungskonzepten einsetzbar. Vorteilhafte Ausgestaltungsformen der Filtervorrichtung sind in den abhängigen Ansprüchen angegeben.

Erfindungsgemäß ist die Filtervorrichtung für einen ersten Betrieb des Umrichters an einem als Wechselspannungsnetz ausgebildeten Netz mit geerdetem Außenleiter oder an einem als Wechselspannungsnetz ausgebildeten erdungsfreien Netz hergerichtet, wobei das Mittel zur Sättigungsminderung aktivierbar und die Kondensatoreinheit von einem geerdeten Schutzleiter trennbar ist.

Unter dem Wechselspannungsnetz als Netz mit geerdetem Außenleiter werden in vorteilhafter Weise insbesondere TT-Netze oder TN-Netze verstanden, bei denen nur einer der Außenleiter an der Erzeugerseite des jeweiligen Netzes mit dem Erdpotential verbunden ist und unter dem als Wechselspannungsnetz ausgebildeten erdungsfreien Netz wird in vorteilhafter Weise insbesondere ein IT-Netz verstanden, bei dem die elektrischen Phasen insbesondere an der Erzeugerseite des Netzes gegenüber dem Erdpotential elektrisch isoliert sind.

Zum Betrieb der Filtervorrichtung an den Netzen mit geerdetem Außenleiter oder an dem erdungsfreien Netz kann vorteilhaft auf einen Trenntransformator verzichtet werden.

In diesem ersten Betrieb ist es somit vorteilhaft, das Mittel zur Sättigungsminderung aktivieren zu können, um die unzulässige Erwärmung der als Gleichtaktdrossel betreibbaren Drosseleinheit für möglichst jeden ihrer elektrischen Zustände im ersten Betrieb durch die Sättigungsminderung verhindern zu können. Die Kondensatoreinheit kann in diesem ersten Betrieb von dem geerdeten Schutzleiter getrennt werden, was die Verhinderung der unzulässigen Erwärmung der Gleichtaktdrossel bevorzugt unterstützt.

Erfindungsgemäß ist die Filtervorrichtung für einen zweiten Betrieb des Umrichters an einem als Wechselspannungsnetz ausgebildeten Netz mit geerdetem Netzsternpunkt hergerichtet, wobei die Kondensatoreinheit mit dem geerdeten Schutzleiter zur Stromableitung eines Stroms verbindbar und das Mittel zur Sättigungsminderung deaktivierbar ist.

Unter dem Wechselspannungsnetz als Netz mit geerdetem Netzsternpunkt werden in vorteilhafter Weise insbesondere TT-Netze oder TN-Netze verstanden, bei denen der an der Erzeugerseite des jeweiligen Netzes gebildete Netzsternpunkt mit dem Erdpotential verbunden ist.

In diesem zweiten Betrieb ist es somit vorteilhaft, die Kondensatoreinheit mit dem geerdeten Schutzleiter verbinden zu können, um den als Gleichtaktstrom erzeugbaren Strom ableiten zu können. Das Mittel zur Sättigungsminderung kann im zweiten Betrieb bevorzugt deaktiviert werden, was die Stromableitung des Gleichtaktstroms effizient unterstützen kann.

Erfindungsgemäß umfasst die Drosseleinheit eine erste Spule in einer ersten Wechselspannungsphase, eine zweite Spule in einer zweiten Wechselspannungsphase und eine dritte Spule in einer dritten Wechselspannungsphase der ersten Wechselspannungsleitung, weist das Mittel zur Sättigungsminderung eine vierte Spule der Drosseleinheit auf, bildet die Drosseleinheit einen gemeinsamen Drosselkern an der ersten, zweiten, dritten und vierten Spule aus und weist das Mittel zur Sättigungsminderung eine erste Kontakteinheit zum Öffnen und Schließen einer ersten elektrischen Verbindung eines Stromkreises an der vierten Spule auf.

Über die vierte Spule an dem gemeinsamen Drosselkern der Drosseleinheit, welche als Gleichtaktdrossel, insbesondere als stromkompensierte Drossel, betreibbar ist, und über den durch die erste Kontakteinheit kurzgeschlossenen Stromkreis an der vierten Spule, kann in vorteilhafter Weise die unzulässige Erwärmung des gemeinsamen Drosselkerns verhindert werden. Der im ersten Betrieb als Strom erzeugbare Gleichtaktstrom kann derart an der Gleichtaktdrossel neutralisiert werden, dass der gemeinsame Drosselkern der Gleichtaktdrossel nicht in unzulässiger Weise, beispielsweise periodisch, in eine Sättigung getrieben wird. Die Stromableitung des Gleichtaktstroms über die Kondensatoreinheit zum geerdeten Schutzleiter ist zur Verhinderung der Sättigung des gemeinsamen Drosselkerns nicht notwendig.

Dies eignet sich vorteilhaft für den Einsatz der Filtervorrichtung an dem als Wechselspannungsnetz ausgebildeten Netz mit geerdetem Außenleiter oder an dem als Wechselspannungsnetz ausgebildeten erdungsfreien Netz.

Bei einer weiteren vorteilhaften Ausgestaltungsform der Filtervorrichtung umfasst die Kondensatoreinheit einen ersten, zweiten und dritten Kondensator, ist der erste Kondensator einerseits mit einer ersten Wechselspannungsphase der ersten Wechselspannungsleitung, der zweite Kondensator einerseits mit einer zweiten Wechselspannungsphase der ersten Wechselspannungsleitung und der dritte Kondensator einerseits mit einer dritten Wechselspannungsphase der ersten Wechselspannungsleitung elektrisch verbunden und bilden die Kondensatoren andererseits einen Kondensatorsternpunkt aus.

Bei einer weiteren vorteilhaften Ausgestaltungsform der Filtervorrichtung ist eine zweite Kontakteinheit zum Öffnen und Schließen einer zweiten elektrischen Verbindung der Kondensatoreinheit mit dem geerdeten Schutzleiter ausgebildet und sind die Kondensatoren der Kondensatoreinheit über den Kondensatorsternpunkt und die zweite Kontakteinheit mit dem geerdeten Schutzleiter elektrisch verbindbar.

Der im zweiten Betrieb als Strom erzeugbare Gleichtaktstrom kann vorteilhaft von der Kondensatoreinheit über die zweite Kontakteinheit zum geerdeten Schutzleiter abgeleitet werden.

Bei einer weiteren vorteilhaften Ausgestaltungsform der Filtervorrichtung weist mindestens eine der Kontakteinheiten einen elektromechanischen Verbinder oder einen Halbleiterschalter auf.

In einer einfachen Form kann der elektromechanische Verbinder zum Beispiel in vorteilhafter Weise als eine Schraubverbindungen aber auch als elektrischer Schalter ausgebildet sein.

Bei einer weiteren vorteilhaften Ausgestaltungsform der Filtervorrichtung ist mindestens eine der Kontakteinheiten als ansteuerbarer Schalter ausgebildet.

Ein ansteuerbarer Schalter kann beispielsweise als IGBT oder MOSFET aber auch als Relais oder Schütz ausgebildet sein.

Bei einer weiteren vorteilhaften Ausgestaltungsform der Filtervorrichtung ist mindestens eine der Kontakteinheiten mittels eines Ansteuersignals einer Steuereinheit ansteuerbar.

Die Steuereinheit kann von der Filtervorrichtung aber beispielsweise auch von einer Steuereinheit des Umrichters umfasst sein.

Sie kann ebenfalls als Steuereinheit ausgebildet sein, welche beispielsweise von einer überlagerten Antriebs-, Automatisierung- oder Energiesteuerung umfasst wird. Sollte sich die Netztopologie ändern, kann auf effiziente und vorteilhaft Weise eine Umschaltung der Filtervorrichtung erfolgen, so dass die Filtervorrichtung für den ersten Betrieb oder den zweiten Betrieb des Umrichters einsetzbar ist.

Bei einer weiteren vorteilhaften Ausgestaltungsform der Filtervorrichtung sind die Kontakteinheiten als ein elektrischer Wechsler ausgebildet.

Mittels des elektrischen Wechslers, auch bekannt als Wechselschalter, erfolgt das gleichzeitige Umschalten der ersten und der zweiten Kontakteinheit und somit eine gleichzeitige Umschaltung der Kontakteinheiten. Beispielweise ist in einem ersten Schaltzustand des Wechslers die erste Kontakteinheit geschlossen und die zweite Kontakteinheit geöffnet. Nach Aktivierung des Wechslers ist danach in einem zweiten Schaltzustand des Wechslers die erste Kontakteinheit geöffnet und die zweite Kontakteinheit geschlossen. Dieser Schaltvorgang des gleichzeitigen Umschaltens der beiden Kontakteinheiten durch den elektrischen Wechsler ist reversibel durchführbar.

Für die Lösung der Aufgabe wird weiterhin ein Umrichter mit der erfindungsgemäßen Filtervorrichtung zum Betrieb einer elektrischen Maschine an dem Wechselspannungsnetz vorgeschlagen.

Bei einer ersten vorteilhaften Ausgestaltungsform des Umrichters ist die Filtervorrichtung in ein Umrichtergehäuse des Umrichters integriert.

Die Integration der Filtervorrichtung in das Umrichtergehäuse des Umrichters hat beispielsweise den Vorteil, dass der Umrichter in kompakter Bauweise stets die Filtervorrichtung für die Anschaltung an die verschiedenen Netztopologien für den ersten und den zweiten Betrieb des Umrichters aufweist und ein Kunde sich mittels Einstellung am Umrichter für den jeweiligen Betrieb entscheiden kann.

Für die Lösung der Aufgabe wird weiterhin ein Verfahren zum Betrieb der erfindungsgemäßen Filtervorrichtung vorgeschlagen, wobei die Filtervorrichtung für den ersten Betrieb des Umrichters an dem als Wechselspannungsnetz ausgebildeten Netz mit geerdetem Außenleiter oder an dem als Wechselspannungsnetz ausgebildeten erdungsfreien Netz eingestellt ist oder die Filtervorrichtung für den zweiten Betrieb des Umrichters an dem als Wechselspannungsnetz ausgebildeten Netz mit geerdetem Netzsternpunkt eingestellt ist.

Bei einer ersten vorteilhaften Ausgestaltungsform des Verfahrens ist im ersten Betrieb des Umrichters das Mittel zur Sättigungsminderung der Drosseleinheit aktiviert und die Kondensatoreinheit von dem geerdeten Schutzleiter getrennt.

Bei einer weiteren vorteilhaften Ausgestaltungsform des Verfahrens ist im zweiten Betrieb des Umrichters die Kondensatoreinheit mit dem geerdeten Schutzleiter zur Stromableitung verbunden und das Mittel zur Sättigungsminderung deaktiviert.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Es zeigt:
- FIG 1: eine schematische Darstellung einer bekannten Filtervorrichtung,
- FIG 2: eine erste schematische Darstellung der erfindungsgemäßen Filtervorrichtung,
- FIG 3: eine zweite schematische Darstellung der erfindungsgemäßen Filtervorrichtung in einem Ausschnitt nach FIG 2 und
- FIG 4: ein schematisches Struktogramm eines Verfahrens für die erfindungsgemäße Filtervorrichtung.

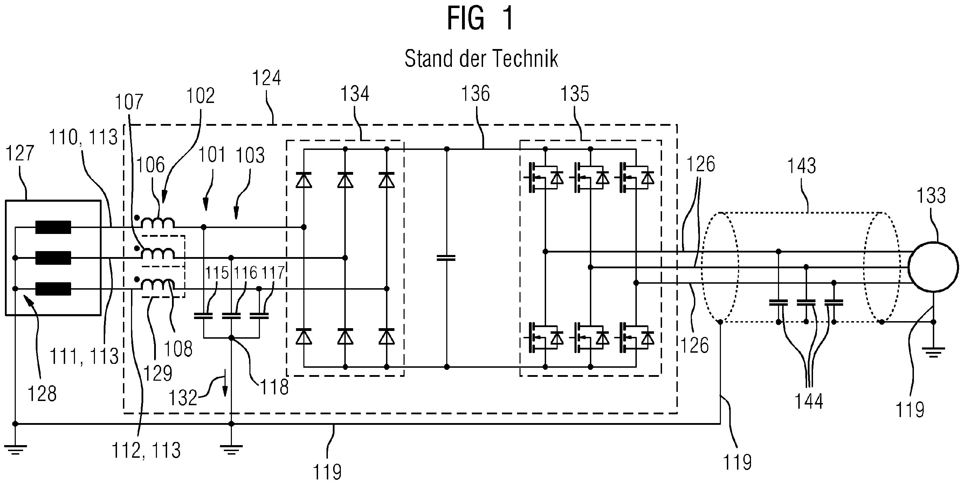

Die FIG 1 zeigt in einer schematischen Darstellung eine bekannte Filtervorrichtung 101, welche an einer ersten Wechselspanungsleitung 113 elektrisch angeordnet und über die erste Wechselspanungsleitung 113 mit einem Gleichrichter 134 eines Umrichters 124 elektrisch verbunden ist.

Der Umrichter 124 weist ferner einen Wechselrichter 135 auf, welcher mittels eines Gleichspannungszwischenkreises 136 elektrisch mit dem Gleichrichter 134 gekoppelt ist.

Der Umrichter 124 ist ausgangsseitig über den Wechselrichter 135 und eine zweite Wechselspannungsleitung 126 mit einer elektrischen Maschine 133 gekoppelt, wobei die elektrische Maschine 133 über einen geerdeten Schutzleiter 119 mit dem Erdpotential verbunden ist.

Die zweite Wechselspannungsleitung 126 weist einen Leitungsschirm 143 auf, welcher mit dem geerdeten Schutzleiter 119 und somit dem Erdpotential verbunden ist. Im Betrieb des Umrichters 124 bilden sich Leitungskapazitäten 144 ausgehend von den einzelnen Phasen der zweiten Wechselspannungsleitung 126 gegenüber dem Leitungsschirm 134 aus.

Die Filtervorrichtung 101 weist eine Drosseleinheit 106 in Form einer Gleichtaktdrossel (stromkompensierter Drossel) und eine Kondensatoreinheit 103 an der ersten Wechselspannungsleitung 113 auf.

Die Drosseleinheit 102 umfasst eine erste Spule 106 in einer ersten Wechselspannungsphase 110, eine zweite Spule 107 in einer zweiten Wechselspannungsphase 111 und eine dritte Spule 108 in einer dritten Wechselspannungsphase 112 der ersten Wechselspannungsleitung 113. Ferner bildet die Drosseleinheit 102 einen gemeinsamen Drosselkern 129 an der ersten, zweiten und dritten Spule 106,107,108 aus.

Die Kondensatoreinheit 103 umfasst einen ersten, zweiten und dritten Kondensator 115,116,117. Der erste Kondensator 115 ist einerseits mit der ersten Wechselspannungsphase 110 der ersten Wechselspannungsleitung 113, der zweite Kondensator 116 ist einerseits mit der zweiten Wechselspannungsphase 111 der ersten Wechselspannungsleitung 113 und der dritte Kondensator 117 ist einerseits mit der dritten Wechselspannungsphase 112 der ersten Wechselspannungsleitung 113 verbunden und die Kondensatoren 115,116,117 bilden andererseits einen Kondensatorsternpunkt 118 aus.

Die Kondensatoren 115,116,117 der Kondensatoreinheit 103 sind über den Kondensatorsternpunkt 118 mit dem geerdeten Schutzleiter 119 verbunden. So kann ein Strom 132 in Form eines Gleichtaktstroms gegenüber dem Erdpotential abgeleitet werden.

Es ist möglich, dass ein weiterer Kondensator in der Verbindung zwischen dem Kondensatorsternpunkt 118 und dem geerdeten Schutzleiter 119 verschaltet werden kann (in FIG 1 nicht gezeigt) .

Die Umrichter 124 mit der Filtervorrichtung 101 ist eingangsseitig mittels der ersten Wechselspannungsleitung 113 mit einem Wechselspannungsnetz 127 verbunden. Das Wechselspannungsnetz 127 ist als Netz mit dem geerdeten Sternpunkt 128, hier als TN-Netz mit geerdetem Sternpunkt 128, ausgebildet. Das Erdpotential für den geerdeten Sternpunkt 128 ist mit dem Schutzleiter 119 verbunden.

Eine Ableitung des Strom 124 ist im bekannten Beispiel nur möglich, soweit der Umrichter 124 wie in FIG 1 an dem Netz mit geerdetem Netzsternpunkt 128 bzw. mit einem zusätzlichen Trenntransformator (in FIG 1 nicht gezeigt) betrieben wird.

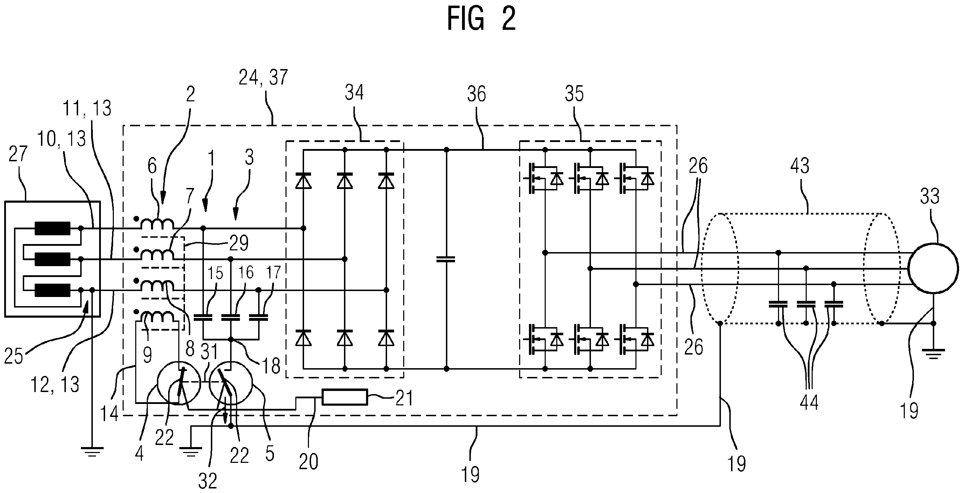

Die FIG 2 zeigt in einer ersten schematischen Darstellung die erfindungsgemäße Filtervorrichtung 1, welche an einer ersten Wechselspanungsleitung 13 elektrisch angeordnet und über die erste Wechselspanungsleitung 13 mit einem Gleichrichter 34 eines Umrichters 24 verbunden ist.

Der Umrichter 24 weist ferner einen Wechselrichter 35 auf, welcher mittels eines Gleichspannungszwischenkreises 36 elektrisch mit dem Gleichrichter 34 gekoppelt ist.

Der Umrichter 24 ist ausgangsseitig über den Wechselrichter 35 und eine zweite Wechselspannungsleitung 26 mit einer elektrischen Maschine 33 gekoppelt, wobei die elektrische Maschine 33 über einen geerdeten Schutzleiter 19 mit dem Erdpotential verbunden ist.

Die zweite Wechselspannungsleitung 26 weist einen Leitungsschirm 43 auf, welcher mit dem geerdeten Schutzleiter 19 und somit dem Erdpotential verbunden ist. Im Betrieb des Umrichters 24 bilden sich Leitungskapazitäten 44 ausgehend von den einzelnen Phasen der zweiten Wechselspannungsleitung 26 gegenüber dem Leitungsschirm 34 aus.

Die Filtervorrichtung 1 weist eine Drosseleinheit 6 in Form einer Gleichtaktdrossel (stromkompensierter Drossel) und eine Kondensatoreinheit 3 an der ersten Wechselspannungsleitung 3 auf.

Die Drosseleinheit 2 umfasst eine erste Spule 6 in einer ersten Wechselspannungsphase 10, eine zweite Spule 7 in einer zweiten Wechselspannungsphase 11 und eine dritte Spule 8 in einer dritten Wechselspannungsphase 12 der ersten Wechselspannungsleitung 13.

Ein Mittel zur Sättigungsminderung der Drosseleinheit 2 weist eine vierte Spule 9 der Drosseleinheit 2 auf.

Das Mittel zur Sättigungsminderung umfasst ferner eine erste Kontakteinheit 4 zum Öffnen und Schließen einer ersten elektrischen Verbindung eines Stromkreises 14 an der vierten Spule 9. Die Drosseleinheit 2 bildet einen gemeinsamen Drosselkern 29 an der ersten, zweiten, dritten und vierten Spule 6,7,8,9 aus. Der Stromkreis 14 an der vierten Spule ist in FIG 2 durch die erste Kontakteinheit 4 als kurzgeschlossen dargestellt, wobei das Mittel zur Sättigungsminderung aktiviert ist.

Die Kondensatoreinheit 3 umfasst einen ersten, zweiten und dritten Kondensator 15,16,17. Der erste Kondensator 15 ist einerseits mit der ersten Wechselspannungsphase 10 der ersten Wechselspannungsleitung 13, der zweite Kondensator 16 ist einerseits mit der zweiten Wechselspannungsphase 11 der ersten Wechselspannungsleitung 13 und der dritte Kondensator 17 ist einerseits mit der dritten Wechselspannungsphase 12 der ersten Wechselspannungsleitung 13 verbunden und die Kondensatoren 15,16,17 bilden andererseits einen Kondensatorsternpunkt 18 aus.

Die Kondensatoren 15,16,17 der Kondensatoreinheit 3 sind über den Kondensatorsternpunkt 18 und die zweite elektrische Kontakteinheit 5 mit dem geerdeten Schutzleiter 19 verbunden, wobei die zweite Kontakteinheit 5 elektrisch geöffnet ist. Ein Strom 32 in Form eines Gleichtaktstroms für einen zweiten Betrieb des Umrichters 24 wird in FIG 2 gegenüber dem Erdpotential nicht abgeleitet.

Es ist möglich, dass ein weiterer Kondensator in der Verbindung zwischen dem Kondensatorsternpunkt 18 und dem geerdeten Schutzleiter 19 in Reihe zu der ersten Kontakteinheit 5 verschaltet werden kann (in FIG 2 nicht gezeigt).

Die beiden Kontakteinheiten 4,5 mit jeweils einem ansteuerbaren Schalter 22 pro Kontakteinheit 4,5 können jeweils allein oder gemeinsam durch ein Ansteuersignal 20 von einer Steuereinheit 21 angesteuert werden. In FIG 2 sind beiden Kontakteinheiten 4,5 als ein elektrischer Wechsler 8 ausgebildet.

Der Umrichter 24 mit der Filtervorrichtung 1 ist eingangsseitig mittels der ersten Wechselspannungsleitung 13 mit einem Wechselspannungsnetz 27 verbunden. Das Wechselspannungsnetz 27 ist als Netz mit geerdetem Außenleiter 25, hier als TT-Netz mit geerdetem Außenleiter 25, ausgebildet. Das Erdpotential für den geerdetem Außenleiter 25 ist nicht mit dem Schutzleiter 19 verbunden.

Demnach ist die in FIG 2 gezeigte schematische Darstellung der Filtervorrichtung 1 für einen ersten Betrieb des Umrichters 24 an dem als Wechselspannungsnetz 27 ausgebildeten Netz mit geerdetem Außenleiter 25 vorgesehen.

Ferner kann der Umrichter 24 mit der Filtervorrichtung 1 in dieser Verschaltung auch an einem als Wechselspannungsnetz 27 ausgebildeten erdungsfreien Netz, beispielsweise einem IT-Netz, betrieben werden. In diesem Fall ist das Wechselspannungsnetz 27 vom Erdpotential isoliert (in FIG 2 nicht dargestellt) .

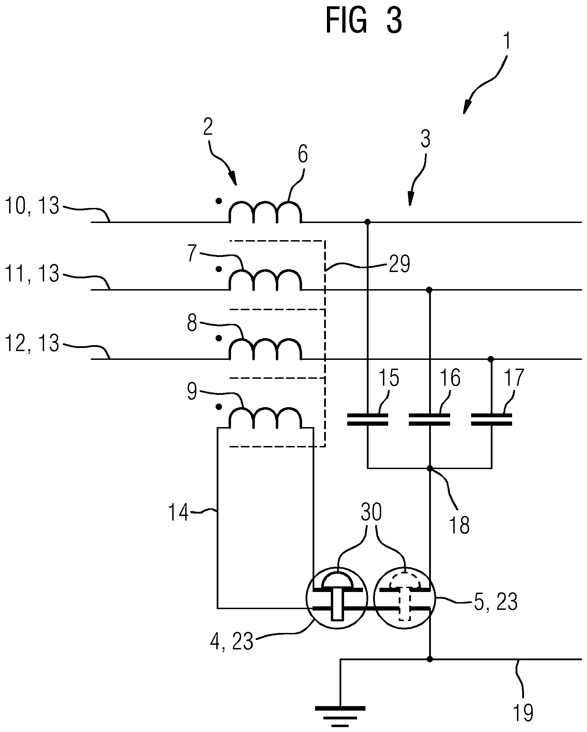

Mittels der FIG 3 wird eine zweite schematische Darstellung der erfindungsgemäßen Filtervorrichtung 1 als Ausschnitt nach FIG 2 dargestellt.

Die Filtervorrichtung 1 ist an der ersten Wechselspanungsleitung 13 elektrisch angeordnet.

Die Filtervorrichtung 1 weist die Drosseleinheit 6 in Form einer Gleichtaktdrossel (stromkompensierter Drossel) und die Kondensatoreinheit 3 an der ersten Wechselspannungsleitung 3 auf.

Die Drosseleinheit 2 umfasst die erste Spule 6 in der ersten Wechselspannungsphase 10, die zweite Spule 7 in der zweiten Wechselspannungsphase 11 und die dritte Spule 8 in der dritten Wechselspannungsphase 12 der ersten Wechselspannungsleitung 13.

Das Mittel zur Sättigungsminderung der Drosseleinheit 2 weist die vierte Spule 9 der Drosseleinheit 2 auf.

Das Mittel zur Sättigungsminderung umfasst ferner die erste Kontakteinheit 4 zum Öffnen und Schließen der ersten elektrischen Verbindung des Stromkreises 14 an der vierten Spule 9. Die Drosseleinheit 2 bildet den gemeinsamen Drosselkern 29 an der ersten, zweiten, dritten und vierten Spule 6,7,8,9 aus. Der Stromkreis 14 an der vierten Spule ist in FIG 3 durch die erste Kontakteinheit 4 als kurzgeschlossen dargestellt, wobei das Mittel zur Sättigungsminderung aktiviert ist.

Die Kondensatoreinheit 3 umfasst den ersten, zweiten und dritten Kondensator 15,16,17. Der erste Kondensator 15 ist einerseits mit der ersten Wechselspannungsphase 10 der ersten Wechselspannungsleitung 13, der zweite Kondensator 16 ist einerseits mit der zweiten Wechselspannungsphase 11 der ersten Wechselspannungsleitung 13 und der dritte Kondensator 17 ist einerseits mit der dritten Wechselspannungsphase 12 der ersten Wechselspannungsleitung 13 verbunden und die Kondensatoren 15,16,17 bilden andererseits den Kondensatorsternpunkt 18 aus.

Die Kondensatoren 15,16,17 der Kondensatoreinheit 3 sind über den Kondensatorsternpunkt 18 und die zweite elektrische Kontakteinheit 5 mit dem geerdeten Schutzleiter 19 verbunden, wobei die zweite Kontakteinheit 5 elektrisch geöffnet ist. Ein Strom 32 in Form eines Gleichtaktstroms für den zweiten Betrieb des Umrichters wird in FIG 3 gegenüber dem Erdpotential nicht abgeleitet.

Die beiden Kontakteinheiten 4,5 sind in FIG 3 jeweils als elektromechanischer Verbinder 23 in Form von Schraubverbindungen 22 ausgebildet. Die Schraubverbindung 22 der zweiten Kontakteinheit 5 ist gestrichelt dargestellt, was den elektromechanischen Verbinder 23 als geöffnet zeigen soll.

Es ist möglich, dass ein weiterer Kondensator in der Verbindung zwischen dem Kondensatorsternpunkt 18 und dem geerdeten Schutzleiter 19 in Reihe zu der ersten Kontakteinheit 5 verschaltet werden kann (in FIG 3 nicht gezeigt).

Demnach ist die in FIG 3 ausschnittsweise nach FIG 2 gezeigte schematische Darstellung der Filtervorrichtung 1 für einen ersten Betrieb des Umrichters an dem als Wechselspannungsnetz ausgebildeten Netz mit geerdetem Außenleiter geeignet (in FIG 3 nicht gezeigt).

Ferner kann der Umrichter mit der Filtervorrichtung 1 in dieser Verschaltung auch an einem als Wechselspannungsnetz ausgebildeten erdungsfreien Netz, beispielsweise einem IT-Netz, betrieben werden. In diesem Fall ist das Wechselspannungsnetz vom Erdpotential isoliert (in FIG 3 nicht dargestellt).

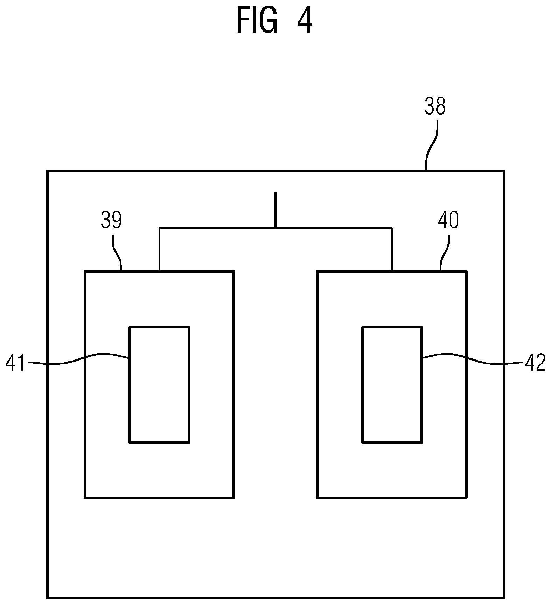

In FIG 4 wird ein schematisches Struktogramm eines Verfahrens 38 für die erfindungsgemäße Filtervorrichtung visualisiert.

Das Verfahren 38 zeigt den Betrieb der Filtervorrichtung, wonach die Filtervorrichtung für den ersten Betrieb 39 des Umrichters für das als Wechselspannungsnetz ausgebildete Netz mit geerdetem Außenleiter oder für das als Wechselspannungsnetz ausgebildete erdungsfreie Netz einstellt ist oder die Filtervorrichtung für den zweiten Betrieb 40 des Umrichters für das als Wechselspannungsnetz ausgebildete Netz mit geerdetem Netzsternpunkt einstellt ist.

Der Anwender der Filtervorrichtung am Umrichter soll sich für eine der beiden Betriebsarten des Umrichters, erster Betrieb 39 oder zweiter Betrieb 40, entscheiden.

Im ersten Betrieb 39 des Umrichters wird das Mittel zur Sättigungsminderung 41 der Drosseleinheit aktiviert und die Kondensatoreinheit von dem geerdeten Schutzleiter getrennt, wobei die Stromableitung 41 deaktiviert ist.

Im zweiten Betrieb 40 des Umrichters ist die Kondensatoreinheit mit dem geerdeten Schutzleiter verbunden, wobei die Stromableitung 42 aktiviert und das Mittel zur Sättigungsminderung 41 deaktiviert ist.

## Patentansprüche

1. Filtervorrichtung (1) zur Verwendung für einen Umrichter (24) an einem Wechselspannungsnetz (27), aufweisend eine Drosseleinheit (2), eine Kondensatoreinheit (3) und Mittel zur Sättigungsminderung (41) der Drosseleinheit (2), hergerichtet für einen ersten Betrieb (39) des Umrichters (24) an einem als Wechselspannungsnetz (27) ausgebildeten Netz mit geerdetem Außenleiter (25) oder an einem als Wechselspannungsnetz (27) ausgebildeten erdungsfreien Netz, wobei das Mittel zur Sättigungsminderung (41) aktivierbar und die Kondensatoreinheit (3) von einem geerdeten Schutzleiter (19) trennbar ist und
hergerichtet für einen zweiten Betrieb (40) des Umrichters (24) an einem als Wechselspannungsnetz (27) ausgebildeten Netz mit geerdetem Netzsternpunkt (28), wobei die Kondensatoreinheit (3) mit dem geerdeten Schutzleiter (19) zur Stromableitung (42) eines Stroms (32) verbindbar und das Mittel zur Sättigungsminderung (41) deaktivierbar ist,
wobei
- die Drosseleinheit (2) eine erste Spule (6) in einer ersten Wechselspannungsphase (10), eine zweite Spule (7) in einer zweiten Wechselspannungsphase (11) und eine dritte Spule (8) in einer dritten Wechselspannungsphase (12) der ersten Wechselspannungsleitung (13) umfasst,
- das Mittel zur Sättigungsminderung (41) eine vierte Spule (9) der Drosseleinheit (2) aufweist,
- die Drosseleinheit (2) einen gemeinsamen Drosselkern (29) an der ersten, zweiten, dritten und vierten Spule (6,7,8,9) ausbildet und
- das Mittel zur Sättigungsminderung (41) eine erste Kontakteinheit (4) zum Öffnen und Schließen einer ersten elektrischen Verbindung eines Stromkreises (14) an der vierten Spule (9) umfasst.

2. Filtervorrichtung (1) nach Anspruch 1, wobei
- die Kondensatoreinheit (3) einen ersten, zweiten und dritten Kondensator (15,16,17) umfasst,
- der erste Kondensator (15) einerseits mit einer ersten Wechselspannungsphase (10) der ersten Wechselspannungsleitung (13), der zweite Kondensator (16) einerseits mit einer zweiten Wechselspannungsphase (11) der ersten Wechselspannungsleitung (13) und der dritte Kondensator (17) einerseits mit einer dritten Wechselspannungsphase (12) der ersten Wechselspannungsleitung (13) verbunden ist und
- die Kondensatoren (15,16,17) andererseits einen Kondensatorsternpunkt (18) ausbilden.

3. Filtervorrichtung (1) nach Anspruch 2, wobei eine zweite Kontakteinheit (5) zum Öffnen und Schließen einer zweiten elektrischen Verbindung der Kondensatoreinheit (3) mit dem geerdeten Schutzleiter (19) ausgebildet ist und wobei die Kondensatoren (15,16,17) der Kondensatoreinheit (3) über den Kondensatorsternpunkt (18) und die zweite Kontakteinheit (5) mit dem geerdeten Schutzleiter (19) elektrisch verbindbar sind.

4. Filtervorrichtung (1) nach einem der vorhergehenden Ansprüche, wobei mindestens eine der Kontakteinheiten (4,5) einen elektromechanischen Verbinder (23) oder einen Halbleiterschalter aufweist.

5. Filtervorrichtung (1) nach einem der vorhergehenden Ansprüche, wobei mindestens eine der Kontakteinheiten (4,5) als ansteuerbarer Schalter (22) ausgebildet ist.

6. Filtervorrichtung (1) nach Anspruch 5, wobei mindestens eine der Kontakteinheiten (4,5) mittels eines Ansteuersignals (20) einer Steuereinheit (21) ansteuerbar ist.

7. Filtervorrichtung (1) nach einem der vorhergehenden Ansprüche, wobei die Kontakteinheiten (4,5) als ein elektrischer Wechsler (31) ausgebildet sind.

8. Umrichter (32) mit einer Filtervorrichtung (1) nach einem der Ansprüche 1 bis 7 zum Betrieb einer elektrischen Maschine (33) an dem Wechselspannungsnetz (27).

9. Umrichter (32) nach Anspruch 8, wobei die Filtervorrichtung (1) in ein Umrichtergehäuse (37) des Umrichters (32) integriert ist.

10. Verfahren (38) zum Betrieb einer Filtervorrichtung (1) nach einem der Ansprüche 1 bis 7, wobei die Filtervorrichtung (1) für den ersten Betrieb (39) des Umrichters (24) an dem als Wechselspannungsnetz (27) ausgebildeten Netz mit geerdetem Außenleiter (25) oder an dem als Wechselspannungsnetz (27) ausgebildeten erdungsfreien Netz eingestellt ist oder die Filtervorrichtung (1) für den zweiten Betrieb (40) des Umrichters (24) an dem als Wechselspannungsnetz (27) ausgebildeten Netz mit geerdetem Netzsternpunkt (28) eingestellt ist.

11. Verfahren (38) nach Anspruch 10, wobei im ersten Betrieb (39) des Umrichters (24) das Mittel zur Sättigungsminderung (41) der Drosseleinheit (2) aktiviert und die Kondensatoreinheit (3) von dem geerdeten Schutzleiter (19) getrennt ist.

12. Verfahren (38) nach Anspruch 10, wobei im zweiten Betrieb (40) des Umrichters (24) die Kondensatoreinheit (3) mit dem geerdeten Schutzleiter (19) zur Stromableitung (42) verbunden und das Mittel zur Sättigungsminderung (41) deaktiviert ist.

## Claims

1. Filter apparatus (1) for use in a converter (24) on an AC voltage network (27), having a choke unit (2), a capacitor unit (3) and means for reducing saturation (41) for the choke unit (2),
prepared for a first operation (39) of the converter (24) on a network designed as an AC voltage network (27) with a grounded external conductor (25) or on a ground-free network designed as an AC voltage network (27), wherein the means for reducing saturation (41) can be activated and the capacitor unit (3) can be disconnected from a grounded protective conductor (19) and
prepared for a second operation (40) of the converter (24) on a network designed as an AC voltage network (27) with a grounded network star point (28), wherein the capacitor unit (3) can be connected to the grounded protective conductor (19) for current dissipation (42) of a current (32) and the means for reducing saturation (41) can be deactivated,
wherein
- the choke unit (2) comprises a first coil (6) in a first AC voltage phase (10), a second coil (7) in a second AC voltage phase (11) and a third coil (8) in a third AC voltage phase (12) of the first AC voltage cable (13),
- the means for reducing saturation (41) has a fourth coil (9) of the choke unit (2),
- the choke unit (2) forms a common choke core (29) on the first, second, third and fourth coil (6,7,8,9) and
- the means for reducing saturation (41) comprises a first contact unit (4) for opening and closing a first electrical connection of a circuit (14) on the fourth coil (9).

2. Filter apparatus (1) according to claim 1, wherein
- the capacitor unit (3) comprises a first, second and third capacitor (15,16,17),
- the first capacitor (15) is connected, on the one hand, to a first AC voltage phase (10) of First AC voltage cable (13), the second capacitor (16) is connected, on the one hand, to a second AC voltage phase (11) of the first AC voltage cable (13) and the third capacitor (17) is connected, on the other hand, to a third AC voltage phase (12) of the first AC voltage cable (13) and
- the capacitors (15,16,17), on the other hand, form a capacitor star point (18).

3. Filter apparatus (1) according to claim 2, wherein a second contact unit (5) is formed for opening and closing a second electrical connection of the capacitor unit (3) to the grounded protective conductor (19) and wherein the capacitors (15,16,17) of the capacitor unit (3) can be electrically connected to the grounded protective conductor (19) via the capacitor star point (18) and the second contact unit (5).

4. Filter apparatus (1) according to one of the preceding claims, wherein at least one of the contact units (4,5) has an electromechanical connector (23) or a semiconductor switch.

5. Filter apparatus (1) according to one of the preceding claims, wherein at least one of the contact units (4,5) is designed as an actuatable switch (22).

6. Filter apparatus (1) according to claim 5, wherein at least one of the contact units (4,5) can be actuated by means of an actuation signal (20) of a control unit (21).

7. Filter apparatus (1) according to one of the preceding claims, wherein the contact units (4,5) are designed as an electric changer (31).

8. Converter (32) with a filter apparatus (1) according to one of claims 1 to 7 for operating an electric machine (33) on the AC voltage network (27).

9. Converter (32) according to claim 8, wherein the filter apparatus (1) is integrated in a converter housing (37) of the converter (32).

10. Method (38) for operating a filter apparatus (1) according to one of claims 1 to 7, wherein the filter apparatus (1) for the first operation (39) of the converter (24) is set in the network (25) designed as an AC voltage network (27) with a grounded external conductor, or in the ground-free network designed as AC voltage network (27), or the filter apparatus (1) for the second operation (40) of the converter (24) is set on the network designed as an AC voltage network (27) with a grounded network star point (28).

11. Method (38) according to claim 10, wherein in the first operation (39) of the converter (24) the means for reducing saturation (41) of the choke unit (2) is activated and the capacitor unit (3) is disconnected from the grounded protective conductor (19).

12. Method (38) according to claim 10, wherein in the second operation (40) of the converter (24) the capacitor unit (3) is connected to the grounded protective conductor (19) for current dissipation (42) and the means for reducing saturation (41) is deactivated.

## Revendications

1. Dispositif (1) de filtrage à utiliser pour un convertisseur (24) sur un réseau (27) de tension alternative, comportant une unité (2) de bobine, une unité (3) de condensateur et un moyen pour diminuer (41) la saturation de l'unité (2) de bobine, agencé pour un premier fonctionnement (39) du convertisseur (24) sur un réseau constitué en réseau (27) de tension alternative à conducteur (25) d'extérieur à la terre ou sur un réseau sans mise à la terre constitué sous la forme d'un réseau (27) de tension alternative, dans lequel le moyen de diminution (41) de la saturation peut être activé et l'unité (3) de condensateur peut être séparé d'un conducteur (19) de protection mis à la terre et
agencé pour un deuxième fonctionnement (40) du convertisseur (24) sur un réseau constitué sous la forme d'un réseau (27) de tension alternative à point (28) neutre de réseau mis à la terre, dans lequel l'unité (3) de condensateur à conducteur (19) de protection mis à la terre peut être connectée pour la dérivation (42) d'un courant (32) et le moyen de diminution (41) de la saturation peut être désactivé,
dans lequel
- l'unité (2) de bobine comprend une première bobine (6) dans une première phase (10) de tension alternative, une deuxième bobine (7) dans une deuxième phase (11) de tension alternative et une troisième bobine (8) dans une troisième phase (12) de tension alternative de la première ligne (13) de tension alternative,
- le moyen de diminution (41) de la saturation a une quatrième bobine (9) de l'unité (2) de bobine,
- l'unité (2) de bobine constitue un noyau (29) commun de bobine sur la première, deuxième, troisième et quatrième bobine (6, 7, 8, 9) et
- le moyen de diminution (41) de la saturation comprend une première unité (4) de contact pour l'ouverture et la fermeture d'une première liaison électrique d'un circuit (14) sur la quatrième bobine (9).

2. Dispositif (1) de filtrage suivant la revendication 1, dans lequel
- l'unité (3) de condensateur comprend un premier, deuxième et troisième condensateur (15, 16, 17)
- le premier condensateur (15) est connecté d'une part à une première phase (10) de tension alternative de la première ligne (13) de tension alternative, le deuxième condensateur (16) d'une part à une deuxième phase (11) de tension alternative de la première ligne (13) de tension alternative et le troisième condensateur (17) d'une part à une troisième phase (12) de tension alternative de la première ligne (13) de tension alternative et
- les condensateurs (15, 16, 17) constituent d'autre part un point (18) neutre de condensateur.

3. Dispositif (1) de filtrage suivant la revendication 2, dans lequel une deuxième unité (5) de contact est constituée pour l'ouverture et la fermeture d'une deuxième liaison électrique de l'unité (3) de condensateur au conducteur (19) de protection mis à la terre et dans lequel les condensateurs (15, 16, 17) de l'unité (3) de condensateur peuvent être reliés électriquement par le point (18) neutre de condensateur et la deuxième unité (5) de contact au conducteur (19) de protection mis à la terre.

4. Dispositif (1) de filtrage suivant l'une des revendications précédentes, dans lequel au moins l'une des unités (4, 5) de contact a un connecteur (23) électromécanique ou un interrupteur à semi-conducteur.

5. Dispositif (1) de filtrage suivant l'une des revendications précédentes, dans lequel au moins l'une des unités (4, 5) de contact est constituée sous la forme d'un interrupteur (22) pouvant être commandé.

6. Dispositif (1) de filtrage suivant la revendication 5, dans lequel au moins l'une des unités (4, 5) de contact peut être commandée au moyen d'un signal (20) de commande d'une unité (21) de commande.

7. Dispositif (1) de filtrage suivant l'une des revendications précédentes, dans lequel les unités (4, 5) de contact sont constituées sous la forme d'un inverseur (31) électrique.

8. Convertisseur (32) ayant un dispositif (1) de filtrage suivant l'une des revendications 1 à 7, pour faire fonctionner une machine (33) électrique sur un réseau (27) de tension alternative.

9. Convertisseur (32) suivant la revendication 8, dans lequel le dispositif (1) de filtrage est intégré dans un boîtier (37) du convertisseur (32).

10. Procédé (38) pour faire fonctionner un dispositif (1) de filtrage suivant l'une des revendications 1 à 7, dans lequel le dispositif (1) de filtrage est réglé pour le premier fonctionnement (39) de convertisseur (24) sur un réseau constitué en réseau (27) de tension alternative à conducteur (25) extérieur mis à la terre ou sur un réseau sans mis à la terre constitué en réseau (27) de tension alternative ou le dispositif (1) de filtrage est réglé pour le deuxième fonctionnement (40) du convertisseur (24) sur le réseau constitué en réseau (27) de tension alternative à point (28) neutre de réseau mis à la terre.

11. Procédé (38) suivant la revendication 10, dans lequel dans le premier fonctionnement (39) du convertisseur (24) le moyen de diminution (41) de la saturation de l'unité (2) de bobine est activé et l'unité (3) de condensateur est séparé du conducteur (19) de protection mis à la terre.

12. Procédé (38) suivant la revendication 10, dans lequel dans le deuxième fonctionnement (40) du convertisseur (24) l'unité (3) de condensateur est reliée au conducteur (19) de protection mis à la terre pour la dérivation (42) du courant et le moyen de diminution (41) de la saturation est désactivé.
